# EUROPÄISCHE PATENTSCHRIFT

(11) **EP 2 025 653 B1**
(45) Veröffentlichungstag und Bekanntmachung des Hinweises auf die Patenterteilung: **08.12.2010**
(21) Anmeldenummer: 08010858.2
(22) Anmeldetag: 14.06.2008
(51) Int. Cl.: C04B 35/44, C04B 35/468, C04B 35/48, F16L 59/00

(54) **Wärmedämmstoff, sowie Verwendung desselben**
Heat insulator and application of the same
Matériau calorifuge et son utilisation

(30) Priorität: 21.07.2007 DE 102007034090
(43) Veröffentlichungstag der Anmeldung: 18.02.2009
(73) Patentinhaber: Forschungszentrum Jülich GmbH, 52425 Jülich (DE)
(72) Erfinder: Pracht, Gerhard, 55263 Wackernheim (DE); Marqués, José-Luis, 80805 München (DE); Vassen, Robert, 52134 Herzogenrath (DE)

(56) Entgegenhaltungen:
- CAO X Q ET AL: "Ceramic materials for thermal barrier coatings" JOURNAL OF THE EUROPEAN CERAMIC SOCIETY, ELSEVIER SCIENCE PUBLISHERS, BARKING, ESSEX, GB, Bd. 24, Nr. 1, 1. Januar 2004 (2004-01-01), Seiten 1-10, XP004452650 ISSN: 0955-2219
- HIGASHIWADA ET AL: "Effect of additives on the pore evolution of zirconia based ceramic foams after sintering" JOURNAL OF THE EUROPEAN CERAMIC SOCIETY, ELSEVIER SCIENCE PUBLISHERS, BARKING, ESSEX, GB, Bd. 27, Nr. 5, 22. Dezember 2006 (2006-12-22), Seiten 2217-2222, XP005812230 ISSN: 0955-2219
- CHEN H C ET AL: "Plasma-sprayed ZrO2 thermal barrier coatings doped with an appropriate amount of SiO2" THIN SOLID FILMS, ELSEVIER-SEQUOIA S.A. LAUSANNE, CH, Bd. 315, Nr. 1-2, 2. März 1998 (1998-03-02), Seiten 159-169, XP004147568 ISSN: 0040-6090
- HIRVONEN ET AL: "Fabrication, structure, mechanical and thermal properties of zirconia-based ceramic nanocomposites" JOURNAL OF THE EUROPEAN CERAMIC SOCIETY, ELSEVIER SCIENCE PUBLISHERS, BARKING, ESSEX, GB, Bd. 26, Nr. 8, 1. Januar 2006 (2006-01-01), Seiten 1497-1505, XP005294057 ISSN: 0955-2219
- CAO X Q ET AL: "Failure of the plasma-sprayed coating of lanthanum hexaluminate" JOURNAL OF THE EUROPEAN CERAMIC SOCIETY, ELSEVIER SCIENCE PUBLISHERS, BARKING, ESSEX, GB, Bd. 28, Nr. 10, 1. Januar 2008 (2008-01-01), Seiten 1979-1986, XP022639850 ISSN: 0955-2219 [gefunden am 2008-03-10]
- MAJUMDAR A ET AL: "Yttria doped zirconia in glassy matrix useful for thermal barrier coating" MATERIALS LETTERS, NORTH HOLLAND PUBLISHING COMPANY. AMSTERDAM, NL, Bd. 44, Nr. 3-4, 1. Juni 2000 (2000-06-01), Seiten 197-202, XP004256479 ISSN: 0167-577X

## Beschreibung

Die Erfindung betrifft einen keramischen Wärmedämmstoff, insbesondere einen Wärmedämmstoff für den Einsatz bei Temperaturen oberhalb von 1150 °C, wie beispielsweise für Gasturbinen, für Kraftwerke oder Flugzeugtriebwerke. Ferner betrifft die Erfindung die Verwendung des Wärmedämmstoffs mit definierten Eigenschaften als Wärmedämmschicht.

### Stand der Technik

Es ist bekannt, dass die Mikrostruktur und die Eigenschaften einer Wärmedämmschicht nicht nur von den reinen Materialeigenschaften bestimmt werden, sondern in hohem Maße auch von dem Herstellungsverfahren und den dabei ausgewählten Prozessparametern. Die für eine gute Wärmedämmschicht erforderliche Temperaturbeständigkeit wird einerseits durch die Phasenstabilität des Werkstoffes und andererseits durch die Gefügestabilität beeinflusst, die wiederum von der Mikrostruktur abhängt.

Als klassisches Wärmedämmschichtmaterial für den Einsatz bei hohen Temperaturen über 1000 °C hat sich bislang tetragonales oder stabilisiertes ZrO₂ bewährt. Dieses liegt als oxidische Deckschicht auf dem metallischen Substrat vor, welches insbesondere aus einem hochlegierten Ni-Basis-Werkstoff besteht. Die Wärmedämmschicht ist entweder direkt oder über eine zusätzliche Zwischenschicht auf dem Substrat angeordnet, die als Haftvermittlerschicht dient. Zur Aufbringung der keramischen Deckschicht sind das atmosphärische Plasmaspritzen (APS) oder auch das Aufdampfen mittels Elektronenstrahl (EB-PVD) geeignet.

Die bislang verwendeten Deck- und Haftvermittlerschichten weisen jedoch bezüglich ihrer thermischen Wechselbeanspruchbarkeit, ihrer Oxidationsbeständigkeit und ihrer Langzeitstabilität noch einige Probleme auf.

Für Deckschichten auf ZrO₂-Basis ist bekannt, dass sie oberhalb von 1000 °C nicht ausreichend beständig sind und ihre Wärmeleitfähigkeit zunimmt. Gleichzeitig tritt regelmäßig eine Verdichtung der porösen Struktur auf. Beide Effekte, die wesentlich durch das Sintern des Werkstoffes beeinflusst werden, führen bei häufigen Temperaturwechseln in der Regel nachteilig zu einem Abplatzen der Deckschicht.

Das als standardmäßige Wärmedämmmaterial bislang eingesetzte mit Y₂O₃ teilstabilisierte Zirkoniumdioxid (YSZ) erleidet bei Temperaturen oberhalb von 1200 °C eine Phasenumwandlung, die beim Abkühlen nachteilig zum Abplatzten der Wärmedämmschicht führen kann. YSZ weist in der Regel einen geringeren Wärmeausdehnungskoeffizienten als die unter der Wärmedämmschicht liegende Metallschicht, beispielsweise eine Nickelsuperlegierungen, auf. Dies hat bei thermischen Belastungen häufig Rissbildungen zur Folge. Beim Langzeiteinsatz zeigt YSZ ein erhebliches Sinterverhalten und das E-Modul der gesinterten Schicht steigt deutlich an. Dadurch verliert die Wärmedämmschicht seine Spannungstoleranz, so dass es letztlich zum Abplatzten der gesamten Schicht kommen kann.

Zudem weist YSZ eine gute Ionenleitfähigkeit für Sauerstoff bei Temperaturen oberhalb von 800 °C auf. Dies begünstigt die Oxidation einer zwischen der Wärmedämmschicht und der metallischen Substratschicht angeordneten Haftvermittlerschicht. Als Folge verändert sich der thermische Ausdehnungskoeffizient dieser Haftvermittlerschicht derart nachteilig, dass ein Abplatzen der Wärmedämmschicht ebenfalls begünstigt wird.

Es ist bekannt, dass Lanthanhexaaluminate, als Wärmedämmmaterialien eine gute Langzeitstabilität bis zu 1400 °C aufweisen. Lanthanhexaaluminate altern bei diesen hohen Temperaturen signifikant langsamer als kommerzielle Wärmedämmschichten auf Basis von Zirkonium. Die typische Zusammensetzung bevorzugt die Ausbildung von Plättchen, die vorteilhaft eine Verdichtung der Schicht während des Sinterns verhindern. Ein besonders geeigneter Vertreter dieser Klasse weist La₂O₃, Al₂O₃ und MgO auf. Die Kristallstruktur entspricht dabei einer Magnetoplumbit Phase.

Aus DE 198 07 163 C1 ist ein Wärmedämmmaterial bekannt, welches thermochemisch stabil und phasenstabil für den Einsatz bei hohen Temperaturen vorteilhaft geeignet ist. Das Material weist die Summenformel M₂O₃-xMeO-yAl₂O₃ auf, mit M = La oder Nd, Me = Erdalkalimetalle, Übergangsmetalle oder Seltenerden, insbesondere Mg, Zn, Co, Mn, Fe, Ni, Cr. Die Koeffizienten x und y weisen den bevorzugten Bereich von 0,2 ≤ x ≤ 3,3 und 10,0 ≤ y ≤ 13 auf. Als Idealzusammensetzung wird LamgAl₁₁O₁₉ offenbart, welches in Magnetoplumbit-Struktur kristallisiert, und ca. 7,1 Mol-% La₂O₃, ca. 14,3 Mol-% MgO und ca. 78,6 Mol-% Al₂O₃ aufweist.

In DE 10 2005 011 225 wird ferner ein weiteres Wärmedämmmaterial mit einer Zusammensetzung gemäß der Formel Ml₂O₃-xLi₂O-yM2₂O₃ beschrieben. Dabei bedeutet M1 = Lanthan, Neodym oder Gadolinium oder Mischungen daraus und M2 = Aluminium, Gallium oder Eisen und Mischungen daraus. Das Material besteht überwiegend aus M2-oxiden, welche in regelmäßigen Abständen Monolagen aus Ml₂O₃ und Lithiumoxid aufweist. Anstelle von Aluminiumoxid kann insbesondere auch Gallium- oder Eisenoxid als M2₂O₃ verwendet werden. Lanthanoxid kann ebenfalls durch Seltenerdenoxide, insbesondere durch Neodym oder Gadolinium substituiert werden.

Aus DE 102 00 803 ist ein Wärmedämmstoff bekannt, der als Ausgangsmaterial ein voll- oder teilstabilisiertes Zirkoniumdioxid, eine Perowskitverbindung, ein Spinell, ein Mullit oder eine Cerverbindung aufweist. Durch die Zugabe einer Fremdphase erhält man einen Wärmedämmstoff, der vorteilhaft eine geringere Sinterneigung als das reine Ausgangsmaterial zeigt.

Ferner sind aus X. Q. Cao, R. Vassen, D. Stoever , "Ceramic materials for thermal barrier coatings", Journal of the European Ceramic Society, Volume 24, Issue 1, January 2004, Pages 1-10, Wärmedämmstoffe auf der Basis von u. a. YSZ, La₂Zr₂O₇, BaZrO₃ und LaMgAl₁₁O₁₉ bekannt. Dabei wird auch eine YSZ-Beschichtung erwähnt, die eine Verurnreinigungs durch Silizium mit weniger als 1 Gew.-% aufweist. Dies kann auf der Oberfläche vorteilhaft zu einer verbesserten Oxidationsbeständigkeit, innerhalb der Phase aber nachteilig zu lokaler Instabilität und zu einer verringerten elektrischenLeitfähigeit führen.

### Aufgabe und Lösung

Die Aufgabe der Erfindung ist es, ein Wärmedämmschichtsystem für den Einsatz bei hohen Temperaturen, insbesondere bei Temperaturen oberhalb von 1150 °C zur Verfügung zu stellen, welches die vorgenannten Nachteile des Standes der Technik überwindet und insbesondere aufgrund seiner Spannungstoleranzen ein sehr gutes Langzeitverhalten aufweist.

Die Aufgabe der Erfindung wird gelöst durch einen Wärmedämmstoff mit der Gesamtheit an Merkmalen gemäß Hauptanspruch sowie durch die Verwendung dieses Stoffes gemäß Nebenanspruch. Vorteilhafte Ausgestaltungen des Wärmedämmstoffes finden sich in den entsprechend abhängigen Ansprüchen.

### Gegenstand der Erfindung

Bislang wurde in der Literatur die Meinung vertreten, dass für Wärmedämmschichten aus mit Y₂O₃ stabilisiertem Zirkoniumdioxid (YSZ) Verunreinigungen, wie beispielsweise SiO₂ oder BN₃, die wegen ihrer starken Sinterneigung bekannt sind, nur in sehr geringen Maßen in Wärmedämmmaterialien vorliegen sollten, da diese Stoffe regelmäßig zu einer erhöhten Schrumpfung des Materials und damit zu einer verkürzten Lebensdauer führen würden. Eine starke Sinterung wurde bislang bei der Herstellung solcher Wärmedämmschichten eher nachteilig bewertet, da diese in der Regel zur Erhöhung der Steifigkeit führt, die wiederum das Abplatzen der Deckschicht begünstigt. Dementsprechend wird beispielsweise in der Literatur für YSZ-Wärmedämmmaterialien vorgeschlagen, SiO₂ nur in Mengen von weniger als 200 ppm oder Al₂O₃ in Mengen von weniger als 500 ppm zuzulassen. Gleiches gilt auch für Beimengungen von TiO₂.

Im Unterscheid zu dem in der Literatur beschriebenen Effekt, dass eine verstärkte Sinterung schlecht für das Langzeitverhalten der Wärmedämmschicht sei, wurde im Rahmen der Erfindung nunmehr gefunden, dass im Gegenteil die Zugabe von Sinterhilfsstoffen in eine Menge von 0,5 bis 10 Gew.-% zu einer modifizierten Mikrostruktur der Wärmedämmschicht führt, die sich eindeutig positiv auf das Langzeitverhalten auswirkt. Dabei werden durch die Zugabe der Sinterhilfsstoffe bei der durch Plasmaspritzen hergestellten Wärmedämmschicht derartige Segmentationsrisse erzeugt, die für die entsprechend vorteilhafte Dehnungstoleranz bei Wechselbeanspruchungen sorgen.

Als geeignete Ausgangsstoffe für die neue vorteilhafte Wärmedämmschicht sind einerseits die mit Y₂O₃, MgO, CaO, Yb₂O₃, Er₂O₃ oder Dy₂O₃ stabilisierten Zirkoniumdioxide und andererseits hochschmelzende Perowskite, ternäre Oxide in Pyrochlor- oder Defektfluoritstruktur und komplexe Oxide in Magnetoplumbit-Struktur zu nennen.

Beispiele für geeignete Perowskite mit A²⁺B⁴⁺O₃ oder A³⁺B³⁺O₃ Struktur sind insbesondere SrZrO₃, BaZrO₃ und LaYbO₃. Die geeigneten Pyrochlore weisen die allgemeine Formel A₂B₂O₇ auf mit A = Seltenerden von La bis Gd und B = Zr, Hf oder Ce. Geeignete Kandidaten als Ausgangsstoffe sind beispielsweise La₂Zr₂O₇, Gd₂Zr₂O₇ mit oder ohne Dotierungen von Nd, Eu, Gd oder Dy. Ferner erscheinen Aluminate mit Magnetoplumbit-Struktur, wie z. B. LaMgAl₁₁O₁₉, als besonders aussichtsreich.

Als geeignete Sinterhilfsstoffe sind im Rahmen dieser Erfindungen insbesondere SiO₂, BO₃, Li₂O und BeO zu nennen, wobei diese Zusätze nicht nur auf die oxidische Form allein beschränkt sind. Geeignet sind auch BN₃ und andere Nitride, oder auch Li₂CO₃.

Die vorteilhafte Wirkung der Sinterhilfsstoffe tritt in einem Zugabenbereich von 0,5 bis 10 Gew.-% bezogen auf das des Ausgangsmaterials ein, insbesondere bei Zugaben im Bereich von 1 bis 5 Gew.-%.

Der erfindungsgemäße Wärmedämmstoff ist insbesondere als Oberschicht (toplayer) eines Wärmedämmschichtsystems geeignet. Durch die während des Einsatzes bei hohen Temperaturen durch Sinterung entstehenden Segmentierungsrisse innerhalb dieser Schicht wird die vorteilhafte Dehnungstoleranz erzielt, die zu einer deutlich höheren Lebensdauer dieser Schicht führt. Die Segmentierungsrisse verlaufen in der Regel vertikal zur Oberfläche, Es wurden jedoch auch teilweise horizontal verlaufende Risse gefunden. Die Segmentierung ist deutlich, jedoch nicht durchgängig.

Dieser erfindungsgemäße Wärmedämmstoff kann vorteilhaft auch als dickere Schicht als bislang üblich eingesetzt werden, da die Dehnungstoleranz die Gefahr eines Abplatzens auch von dickeren Schichten deutlich verringert. Eine dickere Wärmedämmschicht weist jedoch den Vorteil auf, dass größere Temperaturgradienten eingestellt werden können. Das bedeutet, dass das mit der Wärmedämmschicht versehene Bauteil einerseits einer höheren Temperatur oder andererseits einer hohen Temperatur deutlich länger ausgesetzt werden kann, als es bislang möglich war.

In einer ersten Ausgestaltung weist das erfindungsgemäße Wärmedämmschichtsystem eine Haftvermittlerschicht, ein so genanntes Bondcoat, sowie darauf angeordnet die segmentierte Wärmedämmschicht als Oberschicht auf. Eine typische Haftvermittlerschicht hat z. B. die Zusammensetzung MCrAlY mit M = Ni und/oder Co. Zur Verbesserung der Haftung kann diese optional auch noch mit einer Al₂O₃- oder Platinschicht zur versehen sein. Ferner sind auch metallische PtAl-Schichten allein als Bondcoats geeignet.

In einer weiteren Ausgestaltung sind zwischen der segmentierten Wärmedämmschicht als Oberschicht und der Haftvermittlerschicht noch eine oder mehrere Zwischenschichten angeordnet, die auch gradiert vorliegen können. Diese Zwischenschichten weisen ebenfalls wärmedämmende Eigenschaften auf und sind zur Reduzierung der Spannungen in dem Wärmedämmschichtsystem vorgesehen. Als besonders geeignete Zwischenschicht hat sich YSZ erwiesen, da es eine geringe Wärmeleitfähigkeit und einen hohen thermischen Ausdehnungskoeffizienten aufweist, die sehr gut an die üblichen Substrate angepasst sind.

Zur weiteren Reduzierung von Spannungen und zur verbesserten Haftung sind insbesondere gradierte Zwischenschichten vorgesehen.

Durch das Aufbringen des erfindungsgemäßen Wärmedämmstoffs können sowohl sehr dünne, als auch dickere und sehr effektive Wärmedämmschichten auf thermisch hochbelastete Bauteile aufgebracht werden, die besonders langzeitstabil sind und ein Abplatzen der Schicht bei wechselnden Temperaturbeanspruchungen regelmäßig verhindern.

Als Aufbringungsverfahren sind insbesondere thermische Spritzverfahren und PVD/CVD Verfahren geeignet, wobei auch gradierte Schichtaufbauten prinzipiell möglich sind.

### Spezieller Beschreibungsteil

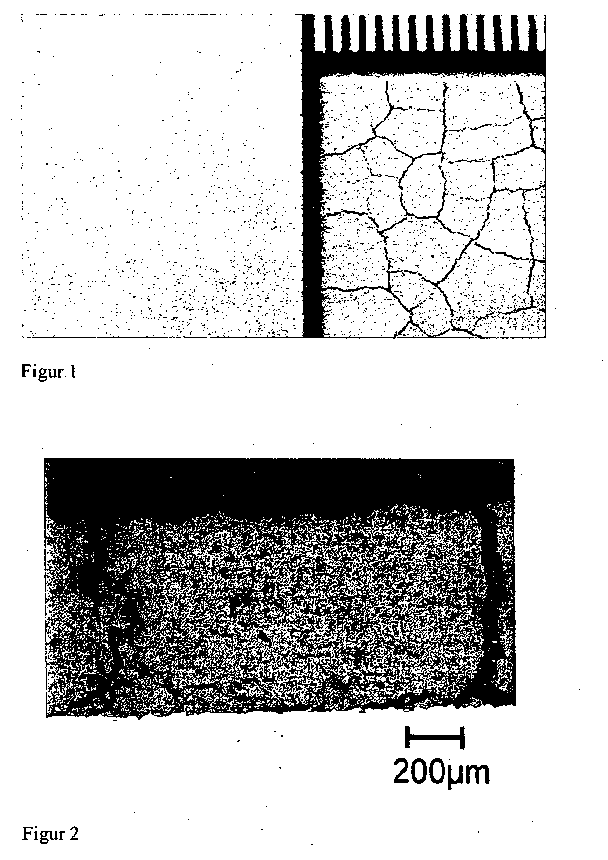

Im Folgenden wird die Erfindung anhand konkreter Ausführungsbeispiele und Figuren näher erläutert, ohne dass dadurch der Schutzbereich dieser Erfindung eingeschränkt werden soll. Dabei zeigen die
- Figur 1:: Plasmagespritzte Schichten von LaMgAl₁₁O₁₉ (links) und LaLiAl₁₁O_{18,5} (rechts) nach einer Wärmebehandlung bei 1200 °C für 5 Stunden. Beide Materialien zeigen typische Segmentierungsrisse an der Ober- fläche, die bis zum Metallsubstrat gehen (s. Figur 2).
- Figur 2:: Optische Mikroskopaufnahme eines Querschliffes der wärmebehandelten plasma- gespritzten Schicht von LaLiAl₁₁O_{18,5} aus dem vorigen Bild.

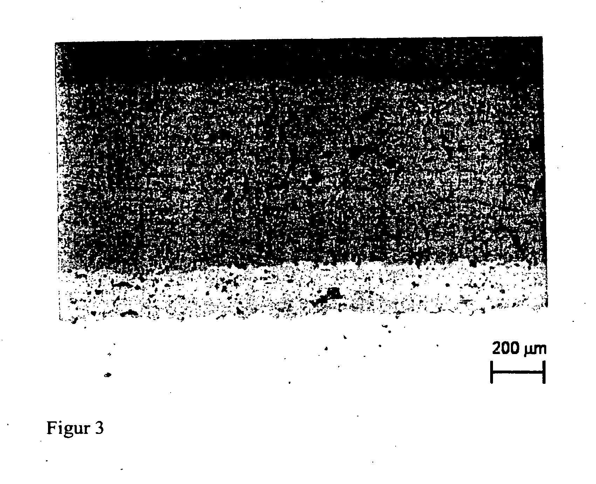

- Figur 3:: Bild einer optischen Mikroskopaufnahme eines Querschliffes der plasmagespritz- ten Schicht von LaLiAl₁₁O_{18,5} nach dem Thermozyklierversuche (nach mehr als 650 Stunden Wärmeeinwirkung bei 1341 °C). In der LaLiAl₁₁O_{18,5} Schicht sind viele Risse zu beobachten.

Es geht in dieser Erfindung allgemein um Wärmedämmschichten aus einem Wärmedämmmaterial mit der vorteilhaften Eigenschaft, während der Anwendung Segmentierungsrisse auszubilden. Wärmedämmschichten werden im Allgemeinen in Flug- und Kraftwerksturbinen bei Hochtemperaturbelastungen von 1200 °C und mehr eingesetzt.

Der klassische Schichtaufbau eines Wärmedämmschichtsystems ist wie folgt:
1. Metallisches Substrat aus Nickel-Basislegierung;
2. Bondcoat aus z. B. NiCoCrAlY oder PtAI-Metallschichten (ca. 150 µm dick) und darauf
3. als Deckschicht (toplayer) eine keramische Schicht, die beim aktuellen Stand der Technik aus Yttrium teilstabilisiertes Zirkoniumdioxid (YSZ) besteht.

Dass hier betrachtete neue erfindungsgemäße Material für die eigentliche Wärmedämmschicht, bzw. Schichten zeigt bei Temperaturen von über 800 °C, also einem typischen Einsatzbereich für Wärmedämmschichten, die Eigenschaft selbstständig zu segmentieren.

Als Grundlage für dieses Material kann theoretisch auch YSZ geeignet sein, unter Zugabe bestimmter Hilfsstoffe. In einem ersten Anwendungsbeispiel ist dies jedoch LaLiAl₁₁O_{18,5} in einer Doppelschicht-Struktur mit YSZ.

Die Unterschiede der neuen Wärmedämmschicht zum bisherigen Stand der Technik lassen sich wie folgt auflisten:
1. Die üblichen Wärmedämmschichten weisen keine Segmentierungsrisse bzw. -fugen auf. Segmentierungsrisse werden explizit nur bei der Beschichtung eingebracht und sind dann in der *as-sprayed* Schicht vorhanden. Demgegenüber entstehen die Segmentierungsrisse in der neuen Wärmedämmschicht im Einsatz während der Anwendung.
2. Je nach Beschichtungstechnologie können beim Stand der Technik Segmentierungsrisse bewusst "eingebaut" werden. Demgegenüber ist bei der neuen Wärmedämmschicht keine besondere Beschichtungstechnologie notwendig. Zum Beispiel können übliche Techniken, wie z. B. Plasmaspritzen oder EB-VD eingesetzt werden.
3. Bislang entstanden poröse Wärmedämmschichten als Endzustand. Nunmehr entstehen poröse Wärmedämmschichten im *as-sprayed* Zustand. Während der Anwendung segmentieren die Schichten vertikal und teilweise auch horizontal.
4. Der thermische Ausdehnungskoeffizient sollte annähernd dem des metallischen Substrats entsprechen, liegt aber häufig bei max. 11,5*10⁻⁶ K⁻¹, was immer noch eine deutliche Differenz zum Substrat darstellt. Bei der neuen Wärmedämmschicht können Standardmetalle mit einem thermischen Ausdehnungskoeffizient von ca. 15*10⁻⁶ K⁻¹ eingesetzt werden, da der thermische Ausdehnungskoeffizient der neuen Wärmedämmschicht nicht mehr so wichtig ist. Beispielsweise liegt dieser für die Beispielverbindung des nachfolgenden Ausführungsbeispiels bei 8-9*10⁻⁶ K⁻¹.
5. Wärmedämmschichten sintern während der Anwendung. Das Sintern führt regelmäßig zu einer Versteifung der Schicht und die Dehnungstoleranz lässt damit erheblich nach. Bei der neuen Wärmedämmschicht sintert das Material ebenfalls, aber die neue Eigenschaft der Segmentierungsrisse verhindert den negativen Einfluss der Versteifung.
6. Bei hoher Temperatur versagten bislang dicke Schichten schneller als dünne, weshalb sich auf hoch temperaturbelasteten Turbinebauteilen, wie z. B. Schaufeln, Schichtdicken von nicht mehr als 300 µm für plasmagespritzte bzw. 150 µm für EB-PVD Schichten bewährt haben. Mit der neuen Wärmedämmschicht sind nunmehr auch dickere Schichtdicken von z. B. 900 µm für hoch temperaturbelastete Bauteile mit unverminderter Lebensdauer des Schichtsystems möglich. Dadurch ergibt sich ein größerer Temperaturgradient, so dass die Bauteile, z. B. Turbinen auch heißer betrieben werden können, was wiederum den Wirkungsgrad erhöht.

Im ersten Anwendungsbeispiel wird eine keramische Doppelschicht beschrieben. Die vorteilhaften Eigenschaften sind aber nicht auf Doppelschichten beschränkt. Ebenso können auch Gefüge mit mehr oder weniger Schichten diese Eigenschaften aufweisen.

In einer Versuchsreihe wurde ein Anwendungsversuch für die Eignung als Hochtemperatur-Turbinenwerkstoff im Sinne einer Wärmedämmschicht durchgeführt. Dazu wurden Thermozyklierversuche durchgeführt, bei denen eine Standardprobe für 5 Minuten mit einem Erdgasbrenner etwa 1350 °C an der Oberfläche erhitzt, und anschließend schockartig auf weniger als 60 °C für 2 Minuten abgekühlt wurde. Während der ganzen Zeit wird die Probe von der Rückseite mit Pressluft abgekühlt, so dass in dem Schichtsystem ein starker Temperaturgradient herrscht. Die Temperatur an der Oberfläche und in der Mitte des metallischen Substrats wird mittels eines Pyrometers bzw. Thermoelements ständig gemessen.

Für diesen Test wurde eine IN738 Nickel-Basislegierung mit einer Haftvermittlerschicht (Bondcoat) aus NiCoCrAlY, mittels Vakuum-Plasmaspritzens beschichtet. Auf diesen Bondcoat wird mittels atmosphärischen Plasmaspritzens eine keramische Deckschicht aufgebracht. (Für den Stand der Technik ist dies eine 300 µm Dicke mit Yttrium teilstabilisierte Zirkoniumdioxid Schicht mit 8 Gew.-% Yttrium (= YSZ)). Als ein Beispiel der Erfindung ist eine Schicht von 150 µm YSZ mit einer 920 µm dicken LaLiAl₁₁O_{18,5}-Schicht, welches nach dem Plasmaspritzen nicht segmentiert war.

Bei einem solch harten Thermoschocktest hält das bekannte teilstabilisierte Zirkoniumdioxid bei 1320 °C etwa 2000 Thermoschockzyklen aus (Schichtdicke 300 µm) bei einem Temperaturgradienten von knapp 1 °C/µm.

Die neue Probe, die während der thermischen Tests ein Rissmuster entwickelte, erreichte eine Lebensdauer von 8247 Zyklen bei einer mittleren Oberflächentemperatur von 1342 °C und einer Substrattemperatur von 946 °C. Es wurde hier eine größere Schichtdicke gewählt, da LaLiAl₁₁O_{18,5} mit 3,8 Wm⁻¹K⁻¹ (bei 1000 °C) eine recht hohe Wärmeleitfähigkeit zeigt.

Die Lebensdauer dieser Probe ist länger als YSZ für eine ähnliche Bondcoat- Temperatur. Wirklich signifikant ist eine solche Lebensdauer jedoch bei der hohen Oberflächentemperatur, bei der ein Standard-Wärmedämmschichtsystem aus YSZ allein eine wesentlich niedrigere Anzahl an Zyklen gehalten hätte, bevor die ersten Beschädigungen an der Oberfläche sichtbar wären. Die Mikrostruktur der neuen untersuchten Proben ist, wie erwartet, stark segmentiert, wenn auch nicht durchgängig von der Oberfläche bis zum Bondcoat. (s. Figur 4). Dabei sind die Schichten auch weiterhin mechanisch stabil. Die Schicht wirkt hart versintert. Diese Schicht von LaLiAl₁₁O_{18,5} steht exemplarische für die gute Thermoschockbeständigkeit von keramischen Wärmedämmschichten für Hochtemperaturanwendungen, die in der Hochtemperaturbelastung, während des Sinters Segmentierungsrisse ausbilden können. Die Segmentierungsrisse bilden eine dehnungstolerante Eigenschaft, die für eine lange Lebensdauer solcher Schichten in der Anwendung einen herausragenden Vorteil darstellen.

Solche neuen Schichten können theoretisch von vielen keramischen Werkstoffen, wie z. B. auch YSZ, gebildet werden, wenn solchen Wärmedämmschicht-Materialien Sinterhilfsstoffe, wie Li₂O, BO₃, SiO₂ und anderer Sinterhilfsstoffe zugegeben werden. Auch ist es möglich, wie im Anwendungsbeispiel gezeigt, dass Legierungsbestandteile, wie Li einer Struktur zudotiert werden, und dadurch die gewünschte Eigenschaft erzielt wird.

Der erfindungsgemäße Wärmedämmstoff bietet sich insbesondere als Deckschicht in einem Wärmedämmschichtsystem an. Als die zu schützende Schicht könnte beispielsweise eine YSZ Schicht vorgesehen sein, die mit EB-PVD aufgebracht ist. Dies hat den Vorteil, dass diese stengelförmige EB-PVD Schicht schon selbst ein wenig dehnungstolerant ist.

Ferner könnten Schichten aus SiO₂ bzw. Emaille als zu schützende Schicht geeignet sein. Bei Emaille Schichten ist schon eine Art Korrosionsschutz gegeben. Zudem können Emaille Schichten auch ein Rissnetzwerk ausbilden.

Alternativ wäre die Glas-Metall-Komposit Schicht als zu schützende Schicht geeignet, da sich diese im thermischen Ausdehungskoeffizienten anpassen kann. Der Schutz dieser Schichten ist sinnvoll, da diese bei höheren Temperaturen recht schnell versagen und diese Schichten waren auch für einen Einsatz in der Gasturbine getestet worden, bzw. sind immer wieder im Gespräch für Schutzschicht im Bereich der Dieselmotoren.

## Patentansprüche

1. Wärmedämmstoff umfassend
- eine erste Basiskomponente aus voll- oder teilstabilisiertem Zirkoniumdioxid, einem hochschmelzenden Perowskit, einem ternären Oxid in Pyrochlor- oder Defektfluoritstruktur oder einem komplexen Oxide in Magnetoplumbitstruktur,
- sowie eine zweite Sinterhilfskomponente mit einem Anteil von 0,5 bis 10 Gew.-%, bezogen auf die Basiskomponente, umfassend Bor, Lithium oder Beryllium.

2. Wärmedämmstoff nach Anspruch 1,
bei dem die Basiskomponente mit Y₂O₃, MgO, CaO, Yb₂O₃, Er₂O₃ oder Dy₂O₃ voll- oder teilstabilisiertes Zirkoniumdioxid umfasst.

3. Wärmedämmstoff nach Anspruch 1,
bei dem die Basiskomponente SrZrO₃, BaZrO₃ oder LaYbO₃ als hochschmelzendes Perowskit umfasst.

4. Wärmedämmstoff nach Anspruch 1,
bei dem die Basiskomponente die Zusammensetzung A₂B₂O₇ mit A = Seltenerden von La bis Gd und B = Zr, Hf oder Ce als ternäres Oxid in Pyrochlorstruktur aufweist.

5. Wärmedämmstoff nach Anspruch 1,
bei dem die Basiskomponente LaMgAl₁₁O₁₉ als komplexes Oxid in Magnetoplumbit-Struktur umfasst.

6. Wärmedämmstoff nach Anspruch 1,
bei dem die zweite Sinterhilfskomponente B, Li oder Be als Oxide oder Nitride umfasst.

7. Verwendung des Wärmedämmstoffs nach einem der Ansprüche 1 bis 6 als Deckschicht in einem Wärmedämmschichtsystem.

8. Wärmedämmschichtsystem umfassend eine Deckschicht aus einem Wärmedämmstoff gemäß einem der Ansprüche 1 bis 6 und wenigstens einer weiteren Schicht umfassend YSZ.

## Claims

1. Heat insulator comprising
- a first basic component made of completely or partly stabilised zirconium oxide, a perovskite with a high melting point, a ternary oxide in a pyrochlore or defect fluorite structure or a complex oxide in a magnetoplumbite structure
- as well as a second sintering aid component with a proportion of 0.5 to 10% by weight with reference to the basic component, comprising boron, lithium or beryllium.

2. Heat insulator according to claim 1,
in which the basic component with Y₂O₃, MgO, CaO, Yb₂O₃, Er₂O₃ or Dy₂O₃ comprises completely or partly stabilised zirconium dioxide.

3. Heatinsulator according to claim 1,
in which the basic component comprises SrZrO₃, BaZrO₃ or LaYbO₃ as a perovskite with a high melting point.

4. Heat insulator according to claim 1,
in which the basic component has the composition A₂B₂O₇ with A = rare earths from La to Gd and B = Zr, Hf or Ce as a ternary oxide in a pyrochlore structure.

5. Heat insulator according to claim 1,
in which the basic component comprises LaMgAl₁₁O₁₉ as a complex oxide in a magnetoplumbite structure.

6. Heat insulator according to claim 1,
in which the second sintering aid component comprises B, Li or Be as an oxide or a nitride.

7. Use of the heat insulator according to one of claims 1 to 6 as a covering layer in a heat insulating layer system.

8. Heat insulating layer system comprising a covering layer made of a heat insulator according to one of claims 1 to 6 and at least a further layer comprising YSZ.

## Revendications

1. Matériau calorifuge comprenant
- un premier composant de base en oxyde de zirconium totalement ou partiellement stabilisé, une pérovskite à point de fusion élevé, un oxyde ternaire à structure pyrochlore ou fluorine défectueuse, ou un oxyde complexe à structure magnétoplombite, ainsi qu'un deuxième composant auxiliaire de frittage pour une part de 0,5 à 10 % en poids du composant de base, comprenant du silicium, du bore, du lithium ou du béryllium.

2. Matériau calorifuge selon la revendication 1,
où le composant de base comprend de l'oxyde de zirconium totalement ou partiellement stabilisé par Y₂O₃, MgO, Cao, Yb₂O₃, Er₂O₃ ou Dy₂O₃.

3. Matériau calorifuge selon la revendication 1,
où le composant de base comprend SrZrO₃, BaZrO₃ ou LaYbO₃ comme pérovskite à point de fusion élevé.

4. Matériau calorifuge selon la revendication 1,
où le composant de base présente la composition A₂B₂O₇ avec A = terres rares de La à Gd et B = Zr, Hf ou Ce comme oxyde ternaire à structure pyrochlore.

5. Matériau calorifuge selon la revendication 1,
où le composant de base comprend LaMgAl₁₁O₁₉ comme oxyde complexe à structure magnétoplombite.

6. Matériau calorifuge selon la revendication 1,
où le deuxième composant auxiliaire de frittage comprend B, Li ou Be comme oxydes ou nitrures.

7. utilisation du matériau calorifuge selon l'une des revendications 1 à 6 comme couche de revêtement dans un système à couches d'isolation thermique.

8. Système à couches d'isolation thermique comprenant une couche de revêtement en matériau calorifuge selon l'une des revendications 1 à 6 et au moins une autre couche comprenant de la zircone yttriée.
